# EUROPÄISCHE PATENTSCHRIFT

(11) **EP 1 785 580 B1**
(45) Veröffentlichungstag und Bekanntmachung des Hinweises auf die Patenterteilung: **06.01.2021**
(21) Anmeldenummer: 05022828.7
(22) Anmeldetag: 19.10.2005
(51) Int. Cl.: E21B 7/20, E21B 7/28, B09B 1/00

(54) **Verfahren zum Verlegen von Rohren, Räumer, Bohrgerät und Rohr**
Process for laying pipes, reamer, boring machine and pipe
Procédé pour poser de tuyaux, élargisseur, dispositif de forage et tuyau

(43) Veröffentlichungstag der Anmeldung: 16.05.2007
(73) Patentinhaber: Max Streicher GmbH & Co. Kommanditgesellschaft auf Aktien, 94469 Deggendorf (DE)
(72) Erfinder: KOLLER, Manfred, 94535 Eging am See (DE); RIEDL, Roland, 94469 Deggendorf (DE)
(74) Vertreter: Manitz Finsterwald Patent- und Rechtsanwaltspartnerschaft mbB

(56) Entgegenhaltungen:
- EP-A- 0 299 624
- EP-A- 0 505 218
- EP-A2- 1 085 167
- DE-A1- 3 109 120
- US-A- 4 483 396
- US-A1- 2003 155 155
- US-A1- 2004 159 468
- US-A1- 2005 111 918
- US-A1- 2005 211 470
- US-B1- 6 926 100

## Beschreibung

Die vorliegende Erfindung betrifft ein Verfahren zum Verlegen von Rohren insbesondere zum Gewinnen von Methangas aus einer Mülldeponie. Weiterhin betrifft die Erfindung einen Räumer sowie ein Bohrgerät, die beim Durchführen des erfindungsgemäßen Verfahrens Verwendung finden.

Rohre, wie beispielsweise Ver- und Entsorgungsleitungen, werden im Erdboden üblicherweise verlegt, indem zunächst entsprechende Rinnen gegraben, die Rohre verlegt und die Rinnen anschließend wieder zugeschüttet werden. Sind jedoch Hindernisse, wie beispielsweise Straßen, Dämme oder dergleichen zu überwinden, so werden meist durch Horizontalbohrungen unter den Hindernissen Bohrkanäle erzeugt, welche auf einer Seite des Hindernisses beginnen, unter dem Hindernis hindurchführen und auf der anderen Seite des Hindernisses in einer Austrittsöffnung enden. Diese Horizontalbohrungen werden dabei durch ein Bohrgerät erzeugt, das im Bereich vor der Eintrittsöffnung des geplanten Bohrkanals positioniert wird und einen Bohrkopf über ein Bohrgestänge hydraulisch in den Erdboden hineintreibt. Das Bohrgestänge besteht dabei aus einer Vielzahl von einzelnen Bohrstangen, die miteinander verbunden, beispielsweise verschraubt werden, um so die gewünschte Länge des Bohrkanals zu erreichen.

Die Horizontalbohrungen müssen dabei nicht exakt horizontal verlaufen, sondern können über eine entsprechende Ausbildung des Bohrkopfes in ihrer Richtung und Steigung variieren, um das Hindernis entsprechend unterirdisch umgehen zu können. Der Name Horizontalbohrung leitet sich lediglich daher ab, dass das Bohrgerät im Wesentlichen horizontal vor der Eintrittsöffnung des Bohrkanals angeordnet ist und sich der Beginn des Bohrkanals üblicherweise annähernd horizontal oder leicht schräg oben und unten verlaufend erstreckt.

Horizontalbohrungen werden üblicherweise im Spülbohrverfahren erzeugt, das heißt, dass das Erdreich aus dem Bohrkanal herausgespült wird. Gleichzeitig wird der verwendeten Spülsuspension meist Bentonit zugegeben, um eine Stabilisierung des Bohrkanals zu erreichen und ein Einbrechen des Bohrkanals zu verhindern.

Tritt der Bohrkopf auf der gegenüberliegenden Seite des Hindernisses aus dem Erdboden aus, so wird er von dem Bohrgestänge abgenommen und durch einen so genannten Räumer ersetzt, mit dem eine Aufweitung des Bohrkanals erfolgt. Der Räumer besitzt an seiner Vorderseite eine im Wesentlichen konische Form sowie je nach Beschaffenheit des Erdbodens unterschiedlich stark ausgebildete Zähne und wird mittels des Bohrgestänges durch den vorhandenen Pilot-Bohrkanal zurückgezogen, bis er an der Eingangsseite des Bohrkanals austritt. Um den Bohrkanal auf die gewünschte Endbreite zu bringen, werden oftmals nacheinander Räumer mit unterschiedlichen Durchmessern verwendet. Beim letzten Verfahrensschritt, bei dem ein Räumer verwendet wird, dessen Außendurchmesser dem gewünschten Enddurchmesser des Bohrkanals entspricht, wird das zu verlegende Rohr über ein Drehgelenk an dem Räumer befestigt und zusammen mit dem Räumer entgegen der ursprünglichen Bohrrichtung in Richtung zum Bohrgerät eingezogen.

Das Einziehen eines Rohres ist nach diesem Verfahren nur dann möglich, wenn der Bohrkanal sowohl eine Eintritts- wie auch eine Austrittsöffnung besitzt, das heißt unter, neben oder über dem Hindernis durch den Erdboden hindurch bzw. hinweggeführt werden kann, bis er jenseits des Hindernisses wieder im Freien mündet.

Ein völlig anderes technisches Gebiet ist die Gewinnung von Methangas aus Mülldeponien. Um das über die Jahre in Mülldeponien entstehende Methangas gewinnen zu können, werden üblicherweise in der Mülldeponie eine Vielzahl von Vertikalbrunnen gesetzt, durch die das im Inneren der Mülldeponie entstehende Methangas nach oben steigt, an der Oberfläche aufgefangen und über Rohre zur weiteren Verwendung abgeführt wird.

Die Vertikalbrunnen werden dabei bereits beim Anlegen der Mülldeponie eingebaut und beim Anwachsen der Mülldeponie ständig in ihrer Höhe verlängert, so dass sie mit der Mülldeponie "mitwachsen".

Problematisch ist dabei, dass zwischen den einzelnen Vertikalbrunnen große Bereiche der Mülldeponie vorhanden sind, deren Methangasanteil nicht von den Vertikalbrunnen aufgenommen wird. Es hat sich herausgestellt, dass in den Mülldeponien oftmals große, im Wesentlichen horizontal verlaufende Methangasschichten vorhanden sind, die mit den üblichen Vertikalbrunnen nur relativ schlecht abgebaut werden können.

Aus der EP 0 299 624 A ist ein Verfahren zum Verlegen von Rohren bekannt, bei dem zunächst eine sich von einer Eintrittsöffnung bis zu einer Austrittsöffnung erstreckende Pilotbohrung mit einem ersten Durchmesser erzeugt wird, der Durchmesser der Pilotbohrung durch einen über die Austrittsöffnung eingeführten Räumer auf einem zweiten vergrößerten Durchmesser aufgeweitet wird und gleichzeitig mit dem Räumer von der Ausgangsöffnung aus ein Rohr in den aufgeweiteten Kanal eingezogen wird.

Aus der US 2004/ 159468 A1 ist ein Räumer bekannt, der radial nach außen ausfahrbare Schneidelemente umfasst.

Aus der US 6 926 100 B1 ist ein Räumer gemäß dem Oberbegriff des Anspruchs 13 bekannt. Der Räumer besitzt einen innenliegenden Grundkörper, an dem über den Umfang verteilt mehrere sich in Längsrichtung erstreckende Schneidmesser beabstandet vom Grundkörper vorgesehen sind.

Aus der EP 0 505 218 A sowie der US 4 483 396 A sind jeweils Rohre gemäß dem Oberbegriff des Anspruchs 18 bekannt, die zum Abführen von Gasen aus Mülldeponien ausgebildet sind und zu diesem Zweck in den Rohrwänden mit Öffnungen versehen sind.

Es ist eine Aufgabe der vorliegenden Erfindung ein Verfahren zum Verlegen von Rohren anzugeben, das insbesondere auch zum verbesserten Gewinnen von Methangas aus Mülldeponien verwendet werden kann. Weiterhin sollen Vorrichtungen zum Durchführen dieses Verfahrens, insbesondere ein entsprechendes Bohrgerät, sowie ein verbesserter Räumer angegeben werden.

Erfindungsgemäß wird die das Verfahren betreffende Aufgabe durch ein Verfahren zum Verlegen von Rohren gelöst, bei dem durch Vorwärtstreiben eines Bohrkopfes ein Sackloch-Bohrkanal mit einem ersten vorgegebenen Durchmesser erzeugt wird, der Sackloch-Bohrkanal durch Vorwärtstreiben eines Sackloch-Räumers auf einen zweiten vorgegebenen Durchmesser aufgeweitet wird, der Sackloch-Räumer aus dem aufgeweiteten Sackloch-Bohrkanal rückwärts herausgezogen wird und ein zu verlegendes Rohr in den aufgeweiteten Sackloch-Bohrkanal hineingetrieben wird.

Ein erfindungsgemäß ausgebildeter Räumer ist zum Aufweiten eines Bohrkanals über ein verlängerbares Bohrgestänge an dem Bohrgerät anschließbar und besitzt an einer Seite zumindest bereichsweise eine eine konisch zulaufende Form bildende Schrägfläche, wobei der Räumer zusätzlich auf seiner der einen Seite entgegengesetzten Seite eine eine zumindest bereichsweise in entgegengesetzter Richtung konisch zulaufende Form bildende Schrägfläche besitzt, die ein Zurückziehen des Räumers aus dem Bohrkanal entgegengesetzt zur Bohrrichtung ermöglicht, zwischen den beiden konisch zulaufenden Schrägflächen des Räumers ein zum Erzeugen einer möglichst glatten Bohrkanalwand ausgebildetes Mittelteil vorgesehen ist, das eine zylindrische Form mit glatter Oberfläche besitzt, und im Bereich der konisch zulaufenden Schrägflächen jeweils Zähne ausgebildet sind, die nicht zu dem zylindrischen, glatten Mittelteil des Räumers hin überstehen.

Ein erfindungsgemäßes Bohrgerät umfasst einen Bohrkopf und einen Räumer, wobei der Bohrkopf zum Erzeugen eines Bohrkanals mit einem ersten vorgegebenen Durchmesser und der Räumer zum Aufweiten des erzeugten Bohrkanals auf einen zweiten vorgegebenen Durchmesser jeweils über ein verlängerbares Bohrgestänge an dem Bohrgerät anschließbar sind und der Räumer gemäß der Erfindung ausgebildet ist.

Ein Rohr kann zum Einführen in einen Bohrkanal ausgebildet sein, wobei an dem in den Bohrkanal einzuführenden vorderen Ende des Rohrs ein Abschlusselement (Rohrspitze) vorgesehen ist, das zumindest einen zum Inneren des Rohrs hin gelegenen verstärk-ten Abschnitt umfasst, der als Druck- oder Schlagfläche für das vordere Ende einer in das Rohr eingeführten, gegen die Druck- oder Schlagfläche auflaufenden Treibstange ausgebildet ist.

Mit dem erfindungsgemäßen Verfahren können Horizontalbohrungen erzeugt und Rohre in den erzeugten Bohrkanälen verlegt werden, auch wenn die erzeugten Bohrkanäle keine der jeweiligen Eintrittsöffnung gegenüberliegende Austrittsöffnung aufweisen. Dies ist insbesondere bei Mülldeponien sinnvoll, da hier meist ein Erzeugen eines durchgängigen Bohrkanals nicht möglich ist und zum anderen zum Abführen von Methangas kein durch die Mülldeponie hindurchführender Kanal erforderlich ist.

Gegenüber den üblichen Horizontalbohrverfahren wird somit lediglich ein Sackloch-Bohrkanal erzeugt, der durch einen erfindungsgemäßen Sackloch-Räumer auf seinen gewünschten Durchmesser gebracht wird. Der Sackloch-Räumer kann nach vollständigen Einbringen bis zum Ende des Sackloch-Bohrkanals rückwärts aus diesem wieder herausgezogen werden da er, im Gegensatz zu üblichen Räumern, nicht nur an einer, sondern an seinen beiden entgegengesetzten Seiten (Vorderseite und Rückseite) jeweils eine konisch zulaufende Form besitzt.

Im Gegensatz zu den üblichen Horizontalbohrverfahren wird das Rohr nicht entgegen der ursprünglichen Bohrrichtung von der Austrittsöffnung des Bohrkanals ausgehend in den Bohrkanal eingezogen, sondern in Bohrrichtung in den aufgeweiteten Sackloch-Bohrkanal hineingetrieben. Dadurch, dass an dem vorderen Ende des Rohrs ein Abschlusselement (Rohrspitze) vorgesehen ist, das einen zum Inneren des Rohrs hin gelegenen, als Druck- oder Schlagfläche ausgebildeten verstärkten Abschnitt umfasst, ist es möglich, in das Rohr eine Treibstange oder ein sonstiges, eine in Vorwärtsrichtung wirkende Kraft erzeugendes Treibelement einzusetzen, das gegen die Druck- oder Schlagfläche aufläuft und das Rohr somit in den Sackloch-Bohrkanal hineintreibt. Das Treibelement kann durch ein Bohrgestänge gebildet werden und bevorzugt hydraulisch oder pneumatisch vorwärtsgetrieben werden. Durch den verstärkten Abschnitt ist dabei gewährleistet, dass das Treibelement nicht durch die Spitze des einzuführenden Rohres hindurch bricht, sondern dass das Rohr bis zum Ende des Sackloch-Bohrkanals in diesen eingeführt werden kann.

Nach einer vorteilhaften Ausführungsform der Erfindung wird nach Erzeugen des Sackloch-Bohrkanals mit dem ersten vorgegebenen Durchmesser der Bohrkopf aus dem Sackloch-Bohrkanal rückwärts herausgezogen und in einem anschließenden Verfahrensschritt der Sackloch-Räumer zum Aufweiten des Sackloch-Bohrkanals in diesen hineingetrieben. Das Erzeugen und Aufweiten des Sackloch-Bohrkanals erfolgt somit in einem zweistufigen oder, bei Bedarf mit mehreren unterschiedliche großen Räumern, in einem mehrstufigen Verfahren, bis der gewünschte Durchmesser des Sackloch-Bohrkanals erreicht wird.

Während in dem Bohrkopf üblicherweise eine Sonde vorgesehen ist, die über Funk Signale zum Orten aussendet, so dass beim Erzeugen einer Pilotbohrung durch entsprechende Messwerte an der Erdoberfläche die jeweilige Position, die Tiefe und der Neigungswinkel des Bohrkopfes und damit der Verlauf des Bohrkanals ermittelt werden kann, besitzt ein Räumer üblicherweise keine solche Sonde. Bei der vorliegenden Ausführungsform kann somit der korrekte Weg des Räumers in den erzeugten Sackloch-Bohrkanal hinein nicht beobachtet und kontrolliert werden. Es kann lediglich anhand der Schwergängigkeit beim Vorwärtstreiben des Räumers auf den korrekten Lauf des Räumers in dem erzeugten Sackloch-Bohrkanal geschlossen werden. Grundsätzlich ist es natürlich auch denkbar, dass eine entsprechende Sonde in dem Räumer vorgesehen wird, so dass der Räumer beim Vorwärtstreiben entsprechend dem Bohrkopf geortet werden kann.

Nach einer weiteren vorteilhaften Ausführungsform erfolgt das Erzeugen und Aufweiten des Sackloch-Bohrkanals in einem gemeinsamen Verfahrensschritt durch Vorwärtstreiben eines mit einem Sackloch-Räumer kombinierten Bohrkopfs. Der Räumer kann dabei mit dem Bohrkopf insbesondere über ein Bohrgestänge verbunden sein, wobei der Bohrkopf in Bohrrichtung vor dem Räumer angeordnet ist, so dass beim Erzeugen des Bohrkanals durch den Bohrkopf durch den nachfolgenden Räumer im gleichen Verfahrensschritt die Aufweitung des Bohrkanals erfolgt.

Bei dieser Ausführungsform wird zum einen ein Verfahrensschritt eingespart, wodurch weniger Zeit erforderlich ist und die Kosten verringert werden können. Zum anderen kann kein "Weglaufen" des Räumers erfolgen, da dieser unmittelbar mit dem Bohrkopf verbunden ist und diesem dadurch zwangsweise im gerade erzeugten Bohrkanal folgt. Bei schwierigen Verhältnissen ist es vorteilhaft, den Bohrkanal in zwei Arbeitsschritten fertig zu stellen, da durch den größeren Durchmesser des Räumers die erforderliche Antriebskraft enorm ansteigt. Die Entscheidung, ob der Bohrkanal in einem oder zwei Arbeitsschritten fertig gestellt wird, muss dabei vor Ort getroffen werden.

Nach einer weiteren vorteilhaften Ausführungsform wird das zu verlegende Rohr aus mehreren Rohrabschnitten zusammengesetzt, die insbesondere im Stumpfschweißverfahren miteinander verbunden werden. Auf diese Weise können vor Ort Rohre mit der gewünschten Länge erzeugt werden, wobei durch das Stumpfschweißverfahren eine im Wesentlichen kontinuierliche und damit reibungsfreie Oberfläche des Rohres gewährleistet ist. Auch die einzelnen Bohrstangen des Bohrgestänges können durch muffenlose Verschraubungen miteinander verbunden sein, so dass eine kontinuierliche, reibungslose Oberfläche des Bohrgestänges gegeben ist. In gleicher Weise können auch der Bohrkopf und der Räumer mit dem Bohrgestänge über muffenlose Gewinde verbunden sein.

Nach einer weiteren vorteilhaften Ausführungsform der Erfindung wird an das vordere Ende des Rohrs ein Abschlusselement (Rohrspitze) angebracht, das zumindest einen zum Inneren des Rohrs hin gelegenen verstärkten Abschnitt umfasst, wobei zum Einbringen des Rohrs in den aufgeweiteten Sackloch-Bohrkanal eine Treibstange in das Rohr eingeführt wird, bis deren vorderes Ende an dem verstärkten Abschnitt des Abschlusselements zur Anlage kommt, so dass das Rohr durch Vorwärtsbewegen der Treibstange in den Sackloch-Bohrkanal hineingetrieben werden kann. Die Treibstange kann dabei durch kontinuierlichen Druck oder durch eine schlagende Bewegung, insbesondere durch eine pneumatisch erzeugte Schlagbewegung, auf den verstärkten Abschnitt des Abschlusselements einwirken. Durch den verstärkten Abschnitt, der als Druck- oder Schlagfläche für die Treibstange ausgebildet ist, wird verhindert, dass die geschlossene Spitze des Rohrs von der Treibstange durchschlagen wird, so dass ein vollständiges Einbringen des Rohrs in den Sackloch-Bohrkanal gewährleistet ist.

Die Treibstange kann ebenfalls mehrteilig ausgebildet sein und insbesondere aus einzelnen, zusammen geschraubten Bohrstangen bestehen, an deren vorderem Ende insbesondere ein Schlag- oder Drucksegment mit bevorzugt flacher Abdeckung als Abschluss vorgesehen sein kann. Die Treibstange kann dabei mit ihrem aus dem Sackloch-Bohrkanal herausstehenden Ende über das Bohrgerät oder ein sonstiges geeignetes Druck- oder Schlagwerkzeug vorwärtsgetrieben werden.

Nach einer weiteren vorteilhaften Ausführungsform der Erfindung wird nach Einbringen des Rohrs in den Sackloch-Bohrkanal der Bereich zwischen der Rohraußenwand und der Innenwand des Sackloch-Bohrkanals im Bereich der Austrittsöffnung des Sackloch-Bohrkanals abgedichtet. Für diese Abdichtung kann insbesondere ein Spezialdämmer verwendet werden, der vorrangig zum Verfüllen und Abdichten von Hohlräumen eingesetzt wird. Die Eigenschaft der Dämmsuspension muss daher zäh fließend sein, um ein zu weites Einfließen des Materials in den Ringraum zwischen Rohr und Kanalwand zu vermeiden. Durch die Abdichtung wird zum einen erreicht, dass kein Methangas, welches sich in dem Ringraum zwischen der Außenseite des Rohrs und der Innenwand des Sackloch-Bohrkanals befindet, nach außen austreten kann. Zum anderen ist gewährleistet, dass das über das eingebrachte Rohr angesaugte Methangas nicht mit von außen zuströmender Umgebungsluft vermischt wird. Das geförderte Methangas kann dadurch eine Reinheit von über 30%, bevorzugt von über 50-60% besitzen.

Nach einer vorteilhaften Ausführungsform der Erfindung wird der Sackloch-Bohrkanal im Verdrängungsverfahren erzeugt. Dies ist insbesondere beim Einbringen der Horizontalbohrung in einer Mülldeponie wesentlich, da hier nach gesetzlichen Vorschriften kein Müll aus den erzeugten Bohrungen austreten darf.

Nach einer weiteren bevorzugten Ausführungsform der Erfindung werden vor Einbringen des zu verlegenden Rohres in der Rohrwand Öffnungen, insbesondere schlitzförmige Öffnungen ausgebildet. Über diese seitlichen Öffnungen kann nach vollständig eingebrachtem Rohr das Methangas aus der Mülldeponie in das Innere des Rohrs eingesaugt werden, so dass es über das Rohr, beispielsweise durch Anlegen eines Vakuums, aus der Mülldeponie abgesaugt werden kann.

Grundsätzlich ist es vorteilhaft, wenn die Öffnungen vor Ort in die Rohrwand eingebracht werden, da damit die Anzahl, Lage und Größe der Öffnungen optimal auf die vorliegenden Gegebenheiten angepasst werden können. Grundsätzlich ist es auch möglich, dass die Öffnungen bereits zu einem früheren Zeitpunkt in die Rohrwand eingebracht werden. Die Öffnungen können dabei in beliebiger Richtung verlaufen, bevorzugt sind jedoch quer zur Längsachse des Rohrs eingebrachte Öffnungen, da diese besonders einfach in die Außenseite der Rohrwand eingeschnitten werden können.

Vorteilhaft werden in dem Bereich des Rohrs, der nach vollständigem Einbringen in den Sackloch-Bohrkanal im Bereich der Austrittsöffnung des Sackloch-Bohrkanals zu liegen kommt, keine Öffnungen in der Rohrwand ausgebildet. Dadurch wird wiederum verhindert, dass zum einen Methangas in die Umgebung austreten kann und zum anderen dass Umgebungsluft mit dem abgesaugten Methangas vermischt wird. Bei einer typischen Gesamtlänge des eingebrachten Rohres von zwischen 15 bis 30m können beispielsweise ein über die ersten 3-7m des Rohrs keine Schlitze vorgesehen werden.

Während die das Bohrgestänge bildenden Bohrstangen üblicherweise aus Metall ausgebildet sind, sind das Rohr und/oder das Abschlusselement bevorzugt aus Kunststoff, insbesondere aus PE (Polyethylen) oder aus HDPE (High Density Polyethylen) ausgebildet. Die Druck- oder Schlagfläche verläuft bevorzugt quer zur Längsachse des Rohrs und ist in das Abschlusselement beispielsweise eingepresst. Bevorzugt kann die Druck- oder Schlagfläche aus Metall, insbesondere als Metallplatte ausgebildet sein, wodurch die erforderliche Stabilität der Druck- oder Schlagfläche erzeugt wird. Als Metall kann z.B. Stahl verwendet werden. Typische Dicken der Metallplatte sind z.B. ca. 5 bis ca. 20mm, insbesondere ca. 10mm.

Das Rohr und das Abschlusselement können als separate Teile ausgebildet sein, die insbesondere im Stumpfschweißverfahren miteinander verbunden sind. Grundsätzlich können die Teile auch auf andere Weise miteinander verbunden sein oder einstückig miteinander ausgebildet sein. Das Abschlusselement kann eine im Wesentlichen kegelförmige Spitze besitzen, um das Einführen des Rohres in den Sackloch-Bohrkanal zu erleichtern.

Weitere vorteilhafte Ausführungsformen der Erfindung sind in den Unteransprüchen angegeben.

Die Erfindung wird im Folgenden anhand eines Ausführungsbeispiels unter Bezugnahme auf die Zeichnungen näher beschrieben; in diesen zeigen:
- Fig. 1: einen schematischen Querschnitt durch eine Mülldeponie, in die ein Rohr gemäß dem erfindungsgemäßen Verfahren eingebracht wird,
- Fig. 2: die Mülldeponie nach Fig. 1 mit mehreren eingebrachten Rohren,
- Fig. 3: eine Detailansicht nach Fig. 2,
- Fig. 4: eine schematische Darstellung eines Bohrkopfs,
- Fig. 5: eine schematische Darstellung eines erfindungsgemäß ausgebildeten Sackloch-Räumers,
- Fig. 6: eine schematische Darstellung einer erfindungsgemäßen Kombination aus einem Sackloch-Räumer und einem Bohrkopf und
- Fig. 7: einen Längsschnitt durch ein erfindungsgemäß ausgebildetes Rohr.

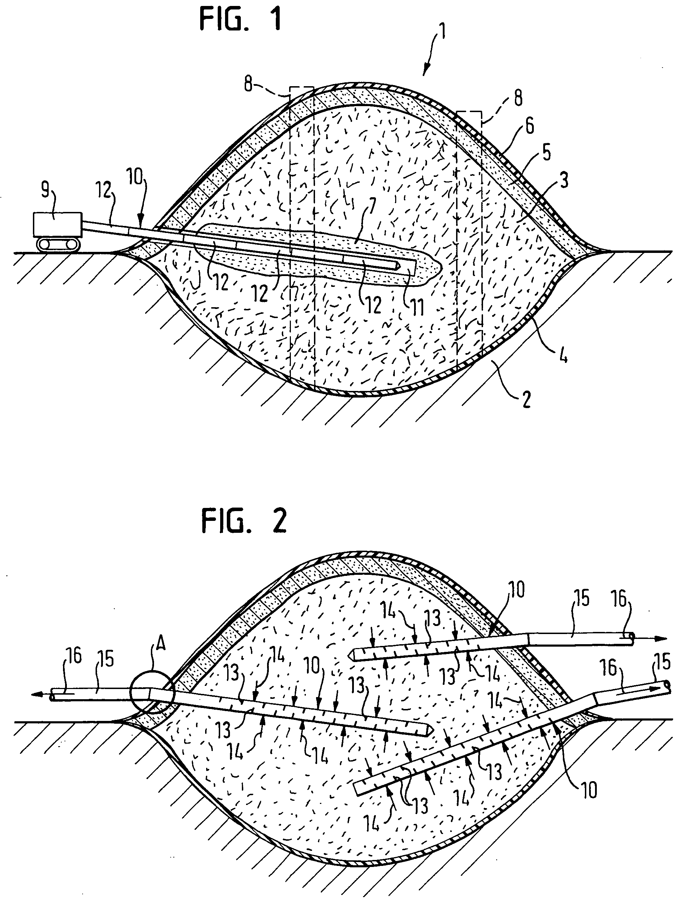

Fig. 1 zeigt eine Mülldeponie 1, welche eine Grube 2 umfasst, in die Müll zu einem Müllberg 3 aufgeschüttet ist. Am Boden der Grube 2 ist eine Abdichtungsschicht 4 aus Kunststoff, Asphalt oder einem sonstigen abdichtenden Material vorgesehen, durch die eine Verunreinigung des Grundwassers mit gefährlichen Stoffen vermieden wird.

An der Oberseite des Müllbergs 3 ist eine ca. 2 m dicke Lehmschicht 5 vorgesehen, die mit einer Folie 6 abgedeckt ist. Die Lehmschicht 5 sowie die Folie 6 dienen ebenfalls zur Abdichtung des Müllbergs 3.

Innerhalb des Müllbergs 3 bildet sich über die Jahre Methangas, das sich beispielsweise in annähernd horizontal verlaufenden Schichten ansammelt, wie es in Fig. 1 am Beispiel einer Methangasschicht 7 dargestellt ist.

Herkömmliche Mülldeponien sind mit Vertikalbrunnen 8 ausgestattet, die in Fig. 1 durch gestrichelte Linien dargestellt sind. Die Vertikalbrunnen 8 erstrecken sich vom Boden der Grube 2 bis über die Folie 6 hinaus und besitzen in ihren Wänden Öffnungen, über die das in dem Müllberg 3 vorhandene Methangas angesaugt und über die Vertikalbrunnen 8 nach oben abgeführt wird. An den oberen Enden der Vertikalbrunnen 8 sind nicht dargestellte Abführleitungen angeschlossen, über die das Methangas abtransportiert wird.

Insbesondere bei horizontal verlaufenden Methangasschichten 7 ist die Ausbeute solcher Vertikalbrunnen 8 jedoch unbefriedigend. Da die Vertikalbrunnen 8 derart angeordnete Methangasschichten 7 lediglich im Wesentlichen senkrecht schneiden, bleiben große Bereiche der Methangasschichten 7 ungenutzt, so dass zwischen den Vertikalbrunnen 8 oftmals noch große nicht abgebaute Mengen von Methangas vorhanden sind.

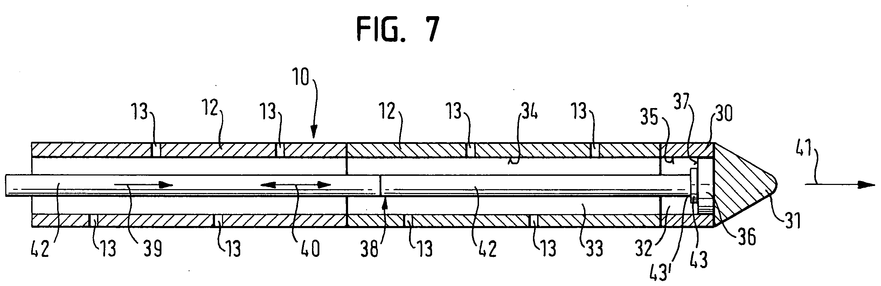

In Fig. 1 ist weiterhin ein erfindungsgemäß ausgebildetes Bohrgerät 9 dargestellt, mit dem ein Rohr 10 in eine leicht schräg nach unten verlaufende Sacklochbohrung 11 in die Mülldeponie 1 eingebracht wird. Das Rohr 10 besteht dabei aus einer Vielzahl von stumpf aneinander geschweißten Rohrabschnitten 12, die aus Kunststoff, insbesondere aus PE hergestellt sind. Der genaue Aufbau des Rohrs 10 wird weiter unten unter Bezugnahme auf Fig. 7 näher beschrieben.

Wie aus Fig. 1 zu erkennen ist, ist bei geeigneter Positionierung der Sacklochbohrung 11 das Rohr 10 im Wesentlichen über seine gesamte Länge innerhalb der Methangasschicht 7 angeordnet. An der Oberfläche des Rohrs 10 sind schlitzförmige Öffnungen 13 ausgebildet (siehe Fig. 2), so dass das in der Methangasschicht 7 vorhandene Methangas durch die Öffnungen 13 in das Rohr 10 eingesaugt werden kann, wie es durch Pfeile 14 in Fig. 2 angedeutet ist.

Mit den horizontal bzw. schräg verlaufenden, insbesondere schräg nach unten verlaufenden Rohren 10 können somit die zwischen vorhandenen Vertikalbrunnen 8 vorhandenen Methangasbereiche effizient ausgebeutet werden.

Insbesondere wenn, wie in Fig. 2 dargestellt, eine Vielzahl von Rohren 10 in erfindungsgemäßer Weise in die Mülldeponie 1 eingebracht worden sind, können erhebliche Mengen von Methangas, welche über Vertikalbrunnen 8 nicht abgebaut werden können, der Mülldeponie 1 entzogen werden. An die aus der Mülldeponie 1 herausragenden Enden der Rohre 10 sind dabei in üblicher Weise weiterführende Rohre 15 angeschlossen, über die das Methangas entlang von Pfeilen 16 zu seiner weiteren Verwendung transportiert wird.

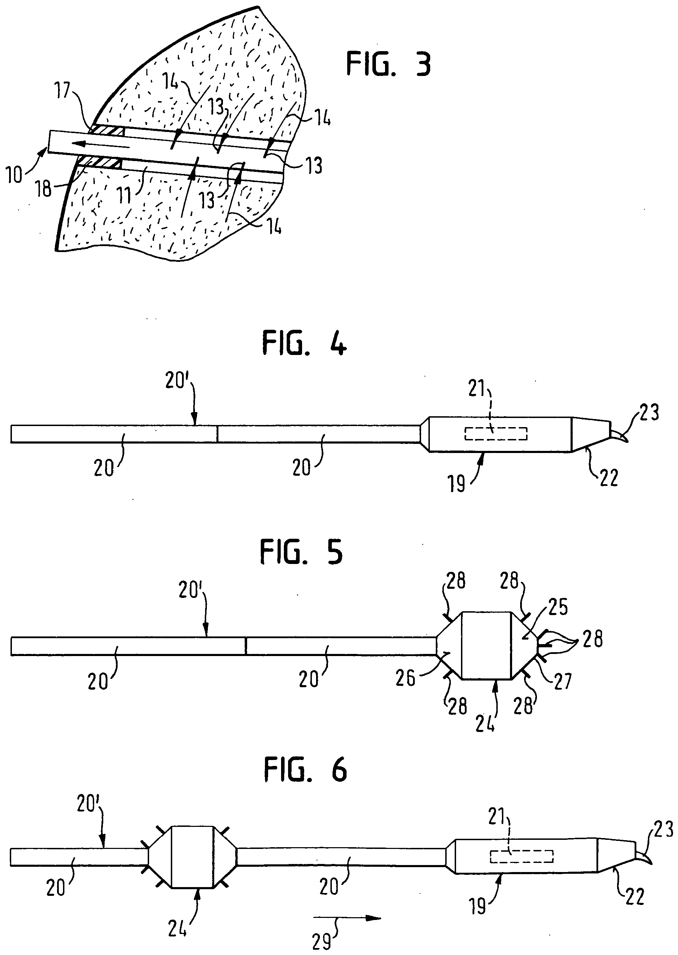

Aus der in Fig. 3 dargestellten Detailansicht A aus Fig. 2 ist zu erkennen, dass der Ringraum im Bereich der Austrittsöffnung 17 der Sacklochbohrung 11, welcher zwischen der Außenseite des Rohrs 10 und der Innenwand der Sacklochbohrung 11 gebildet ist, mit Dichtungsmaterial 18 abgedichtet ist. Durch die Abdichtung wird zum einen verhindert, dass Methangas unkontrolliert über die Austrittsöffnung 17 in die Umgebung austreten kann und zum anderen wird eine Zufuhr von Umgebungsluft über die Austrittsöffnung 17 in den Ringraum hinein und anschließend über die Öffnungen 13 in das Innere des Rohres verhindert, was zu einer Vermischung von Umgebungsluft mit Methangas führen würde. Auf diese Weise wird sichergestellt, dass das geförderte Methangas einen hohen Reinheitsgrad (z.B. 50-60%) besitzt. Als Dichtungsmaterial kann dabei beispielsweise ein Spezialdämmer verwendet werden, der in den Ringraum z.B. über eine Injektionslanze eingebracht wird.

In Fig. 4 ist ein Bohrkopf 19 dargestellt, der über muffenlose Schraubverbindungen mit einer Bohrstange 20 verschraubt ist. Die Bohrstange 20 ist an ihrem freien Ende mit einer weiteren Bohrstange 20 verschraubt und bildet zusammen mit dieser und weiteren Bohrstangen 20 ein Bohrgestänge (20'), welches aufgrund der muffenlosen Verschraubung der einzelnen Bohrstangen (20) eine im Wesentlichen glatte Oberfläche besitzt.

Im Inneren des Bohrkopfs 19 ist eine Sonde 21 vorgesehen, mit der die Richtung, die Position, die Entfernung sowie der jeweilige Winkel zur Erdoberfläche an ein an der Oberfläche vorgesehenes Messgerät übertragen werden kann. An der Vorderseite des Bohrkopfs 19 ist eine schräge Steuerfläche 22 ausgebildet, über die eine Steuerung des Bohrkopfes 19 möglich ist. Weiterhin sind an der Spitze des Bohrkopfs 19 ein oder mehrere Zähne 23 ausgebildet, durch die die gewünschte Schneidwirkung des Bohrkopfes 19 erzielt wird.

Fig. 5 zeigt einen erfindungsgemäß ausgebildeten Sackloch-Räumer 24, der, wie der Bohrkopf 19, mit Bohrstangen 20 verschraubt ist. Der Sackloch-Räumer 24 besitzt sowohl an seiner Vorder- als auch an seiner Rückseite jeweils eine konische, spitz zulaufende Form, wobei die die konische Form bildenden Schrägflächen 25, 26 im Wesentlichen den gleichen Winkel gegenüber der Längsachse der Bohrstangen 20 und des Räumers 24 besitzen. Sowohl im Bereich der konischen Schrägflächen 25, 26 sowie an der freien vorderen Spitze 27 des Sackloch-Räumers 24 sind jeweils Zähne 28 ausgebildet, durch die die Räumwirkung des Sackloch-Räumers 24 erhöht wird. Die Schneidezähne 28 sind dabei so angebracht, dass kein Überstehen zum Mittelteil des Sackloch-Räumers 24 hin besteht. Der Mittelteil des Sackloch-Räumers 24 besitzt eine zylindrische Form mit glatter Oberfläche, um beim Zurückziehen des Sackloch-Räumers 24 eine möglichst glatte Bohrkanalwand erzeugen zu können.

Fig. 6 zeigt eine Kombination eines Bohrkopfs 19 mit einem erfindungsgemäß ausgebildeten Sackloch-Räumer 24. Der Bohrkopf 19 und der Sackloch-Räumer 24 sind über eine Bohrstange 20 miteinander verbunden, wobei der Sackloch-Räumer 24 in der durch einen Pfeil 29 dargestellten Bohrrichtung hinter dem Bohrkopf 19 angeordnet ist. An dem anderen Ende des Sackloch-Räumers 24 ist ebenfalls eine Bohrstange 20 angeschraubt, die zusammen mit einer Vielzahl von weiteren Bohrstangen 20 das Bohrgestänge 20' vervollständigt.

Aus dem in Fig. 7 dargestellten Längsschnitt durch das Rohr 10 ist erkennbar, dass am vorderen Ende des Rohrs 10 ein Abschlusselement 30 vorgesehen ist. Das Abschlusselement 30 kann dabei aus dem gleichen Material wie das Rohr 10 ausgebildet sein und mit diesem im Stumpfschweißverfahren verbunden sein. Das vordere Ende des Abschlusselements 30 bildet dabei eine aus Vollmaterial bestehende konische Spitze 31. An die Spitze 31 schließt sich ein Hohlraum 32 an, der insbesondere einen kreisförmigen Querschnitt besitzen kann und bevorzugt den gleichen Durchmesser besitzt, wie der Innenraum 33 des Rohrs 10, so dass die Innenseiten 34 und 35 des Rohrs 10 bzw. des Abschlusselements 30 kontinuierlich ineinander übergehen.

In den Hohlraum 32 ist eine Stahlplatte 36 so eingepresst, dass sie im Wesentlichen vollflächig an der aus Vollmaterial bestehenden Spitze 31 anliegt und sich ihre zum Hohlraum 32 hin zeigende Fläche 37 quer zur Längsachse des Rohrs 10 erstreckt. Grundsätzlich ist auch eine andere Befestigung der Stahlplatte 36 in dem Abschlusselement 30 möglich. Die Stahlplatte 36 bildet einen verstärkten Abschnitt des Rohrs 10. Grundsätzlich kann der verstärkte Abschnitt auch durch eine sonstiges zur Verstärkung geeignetes Element gebildet werden.

In dem Innenraum 33 des Rohrs 10 ist eine Treibstange 38 angeordnet, die entsprechend einem Pfeil 39 unter hohem Druck gegen die Fläche 37 der Metallplatte 36 gedrückt wird oder entsprechend einem Pfeil 40 beispielsweise über ein pneumatisches Schlaggerät wiederholt auf die Fläche 37 der Metallplatte 36 aufschlägt, so dass das Rohr 10 entsprechend einem Pfeil 41 nach vorne getrieben wird. Die Fläche 37 bildet somit eine Druck- oder Schlagfläche des Abschlusselements 30.

Die Treibstange 38 kann aus einer Vielzahl von Treibstangenabschnitten 42 bestehen, welche beispielsweise muffenlos miteinander verschraubt sind. Beispielsweise können die Treibstangenabschnitte 42 durch Bohrstangen gebildet werden.

An dem vorderen Ende 43' des vordersten Treibstangenabschnitts 42 ist ein flaches Abdeckelement 43 angebracht, über die die Bewegung der Treibstange 38 auf die Metallplatte 36 flächig übertragen wird, so dass ein Einschneiden der Vorderkanten der Treibstange 38, insbesondere bei einer Ausbildung als rohrförmige Treibstange 38, vermieden wird.

Im Weiteren wird die Verwendung der erfindungsgemäßen Vorrichtungen sowie das erfindungsgemäße Verfahren näher beschrieben.

Zunächst wird der Bohrkopf 19 auf das freie Ende einer Bohrstange 20 aufgeschraubt und über das Bohrgerät 9 in die Mülldeponie 1 zur Erzeugung des Sackloch-Bohrkanals 11 hineingetrieben. Die Position und gewünschte Richtung des Bohrkopfes 19 wird dabei über die von der Sonde 21 abgegebenen Signale in bekannter Weise ermittelt. Bei einem Abweichen von der gewünschten Richtung wird die Drehung des Bohrkopfes 19 angehalten und das Bohrgestänge 20' ohne Drehung vorwärts geschoben, so dass über die schräge Steuerfläche 22 die gewünschte Richtung der Bohrung wieder eingestellt wird. Der Bohrkopf 19 kann beispielsweise einen Außendurchmesser von 150mm besitzen. Je nach Anwendungsfall sind auch größere oder kleinere Durchmesser möglich.

Das Bohrgestänge 20' wird sukzessive durch Anschrauben weiterer Bohrstangen 20 so lange verlängert, bis der Sackloch-Bohrkanal 11 seine gewünschte Länge erreicht hat. Die einzelnen Bohrstangen können dabei beispielsweise eine Länge von ca. 3m und einen Durchmesser von ca. 63mm besitzen. Die Längen und Durchmesser sind je nach Anwendungsfall zu wählen.

Anschließend wird das Bohrgestänge 20' über das Bohrgerät 9 wieder aus dem Sackloch-Bohrkanal 11 rückwärts herausgezogen, wobei jeweils eine Bohrstange 20 nach der anderen abgeschraubt wird, bis letztlich auch der Bohrkopf 19 aus der Austrittsöffnung 17 des Sackloch-Bohrkanals 11 herausgezogen wird.

In einem nächsten Verfahrensschritt wird anstelle des Bohrkopfs 19 der Sackloch-Räumer 24 auf eine Bohrstange 20 aufgeschraubt und über das Bohrgerät 9 in den bereits vorhandenen Sackloch-Bohrkanal 11 eingeführt, um diesen auf seine gewünschte Endweite aufzuweiten. Aufgrund der konisch zulaufenden Schrägflächen 25 findet der Sackloch-Räumer 24 dabei seinen Weg durch den zuvor gebohrten Sackloch-Bohrkanal 11, wobei durch die Zähne 28 die Aufweitung des Sackloch-Bohrkanals 11 unterstützt wird. Der Sackloch-Räumer 24 kann beispielsweise einen Außendurchmesser von ca. 110mm besitzen, jedoch sind je nach Anwendungsfall auch größere oder kleinere Durchmesser möglich.

Nachdem der Sackloch-Räumer 24 das Ende des Sackloch-Bohrkanals 11 erreicht hat, wird das Bohrgestänge über das Bohrgerät 9 wieder aus dem Sackloch-Bohrkanal 11 herausgezogen, wobei die einzelnen Bohrstangen 20 jeweils nacheinander wieder auseinander geschraubt werden. Aufgrund der auch in Rückzugrichtung zeigenden zweiten konischen Schrägfläche 26 ist das Zurückziehen des Sackloch-Räumers 24 problemlos möglich, wobei eventuell in den Sackloch-Bohrkanal 11 hineinragende Hindernisse durch die Zähne 28 beseitigt werden.

Nachdem der Sackloch-Räumer 24 aus dem Sackloch-Bohrkanal 11 vollständig herausgezogen wurde, wird in einem nächsten Verfahrensschritt das Rohr 10 in den nun vollständig aufgeweiteten Sackloch-Bohrkanal 11 eingebracht.

Dazu wird zunächst das Abschlusselement 30 mit einem ersten Rohrabschnitt 12 im Stumpfschweißverfahren verbunden. Es ist darauf zu achten, dass die Abkühlzeiten der Schweißverbindung eingehalten werden. Nur so ist ein ordnungsgemäßes Eintreiben der Rohre möglich, ohne die Schweißverbindung zu beschädigen. Dieser erste Rohrabschnitt 12 wird zusammen mit dem Abschlusselement 30 in die Austrittsöffnung 17 des Sackloch-Bohrkanals 11 eingesetzt. Weiterhin wird die Treibstange 38 in den Rohrabschnitt 12 eingeschoben, bis die Treibstange 38 mit ihrem Abdeckelement 43 an der Fläche 37 der Metallplatte 36 zur Anlage kommt. Die Treibstange 38 wird an ihrem nach außen aus dem Rohrabschnitt 12 hinausragenden Ende über das Bohrgerät 9 mit hohem Druck nach vorne geschoben, so dass der Rohrabschnitt 12 in den Sacklochbohrkanal 11 eingeschoben wird.

Anschließend wird der nächste Rohrabschnitt 12 mit dem aus dem Sackloch-Bohrkanal 11 hinaus stehenden Ende des bereits eingeschobenen Rohrabschnitts 12 im Stumpfschweißverfahren verbunden, wodurch das Rohr 10 gebildet wird. Die einzelnen Rohrabschnitte 12 können z.B. eine Länge von ca. 3m sowie einen Außendurchmesser von ca. 110mm und einen Innendurchmesser von ca. 90mm besitzen. Die Längen und Durchmesser sind je nach Gegebenheit entsprechend auszuwählen.

Vor Einschieben des jeweiligen Rohrabschnitts 12 wird je nach Anwendungsfall in der Wand des Rohrabschnitts 12 eine Vielzahl von Öffnungen 38 eingebracht. Beispielsweise können diese Öffnung durch quer zur Längsachse des Rohrabschnitts 12 verlaufende Einschnitte in der Wand des Rohrabschnitts 12 erzeugt werden. Die Anzahl, Größe, Form und Lage der Öffnungen können dabei an den jeweiligen Bedarf vor Ort angepasst werden.

Im Weiteren werden sowohl das Rohr 10 als auch die Treibstange 38 durch jeweiliges Hinzufügen von weiteren Rohrabschnitten 12 bzw. weiteren Treibstangenabschnitten 42 jeweils verlängert, so dass das Rohr 10 immer weiter in den Sackloch-Bohrkanal 11 hineingetrieben wird, bis es letztlich vollständig in diesem zu liegen kommt.

Anschließend wird die Austrittsöffnung 17 im Bereich um das nach außen hervorstehende Rohr 10 mit Dichtungsmaterial 18 abgedichtet, so dass ein Austreten von Methangas aus der Austrittsöffnung 17 sowie ein Eintreten von Umgebungsatmosphäre über die Austrittsöffnung 17 in den Sackloch-Bohrkanal 11 ausgeschlossen ist.

Das nach außen stehende Ende des Rohrs 10 wird in üblicher Weise an eine Transportleitung 15 angeschlossen, so dass beispielsweise über ein Vakuum das in der Mülldeponie enthaltene Methangas angesaugt und seiner weiteren Verwendung zugeführt werden kann.

Bei Verwendung des in Fig. 6 dargestellten Räumers mit vorgeschaltetem Bohrkopf können die beschriebenen ersten und zweiten Verfahrensschritte zu einem einzigen Verfahrensschritt zusammengefasst werden. Durch die Kombination von Bohrkopf 19 und Räumer 24 wird bereits beim Erzeugen der Pilotbohrung durch den Bohrkopf 19 mittels des nachgeschalteten Räumers 24 der Sackloch-Bohrkanal 11 auf seine gewünschte Weite aufgeweitet. Auch in diesem Fall kann durch die doppelkonische Form des Räumers 24 dieser sowohl in Vorschubrichtung wie auch in Rückzugrichtung problemlos vorwärtsgetrieben bzw. zurückgezogen werden. Nach vollständigem Herausziehen des Räumers 24 mit dem Bohrkopf 19 wird dann in einem weiteren Verfahrensschritt das Rohr 10 wie beschrieben in den entstandenen Sackloch-Bohrkanal 11 eingeführt.

Diese Ausführungsform hat den Vorteil, dass zum einen ein Verfahrensschritt eingespart werden kann und zum anderen der Räumer 24 durch seine Verbindung mit dem Bohrkopf 19 beim Einbringen nicht fehlgeleitet werden kann. Aufgrund der ungleichmäßigen Konsistenz innerhalb der Mülldeponie 1 ist es denkbar, dass auch bei durch den Bohrkopf 19 erzeugten Sackloch-Bohrkanal 11 der nachträglich eingeführte Räumer 24 von seiner korrekten Bohrlinie durch den Sackloch-Bohrkanal 11 abweicht und beispielsweise in einen zufällig vorhandenen Seitenkanal eindringt. Dies wird durch die Kombination von Bohrkopf 19 mit Räumer 24 nach Fig. 6 ausgeschlossen.

In einer weiteren Ausführungsform ist es möglich, dass zunächst der Bohrkopf 19 alleine wie beschrieben zur Erzeugung des Sackloch-Bohrkanals 11 eingesetzt wird, dass anschließend jedoch die in Fig. 6 dargestellte Kombination aus Bohrkopf 19 und Sackloch-Räumer 24 in den bereits vorhandenen Sackloch-Bohrkanal 11 eingeführt wird, um auf diese Weise über die Sonde 21 das korrekte Einbringen des Räumers 24 in den vorhandenen Sackloch-Bohrkanal 11 zu kontrollieren.

Grundsätzlich ist es auch denkbar, dass in den Sackloch-Räumer 24 eine entsprechende Sonde eingebracht wird, um auf diese Weise die Position des Sackloch-Räumers 24 zu kontrollieren.

### Bezugszeichenliste

- 1: Mülldeponie
- 2: Grube
- 3: Müllberg
- 4: Abdichtungsschicht
- 5: Lehmschicht
- 6: Folie
- 7: Methangasschicht
- 8: Vertikalbrunnen
- 9: Bohrgerät
- 10: Rohr
- 11: Sackloch-Bohrkanal
- 12: Rohrabschnitte
- 13: Öffnungen
- 14: Pfeile
- 15: weiterführende Rohre
- 16: Pfeil
- 17: Austrittsöffnung
- 18: Dichtungsmaterial
- 19: Bohrkopf
- 20: Bohrstange
- 20': Bohrgestänge
- 21: Sonde
- 22: Steuerschräge
- 23: Zahn
- 24: Sackloch-Räumer
- 25: konische Schrägfläche
- 26: konische Schrägfläche
- 27: Spitze
- 28: Zähne
- 29: Pfeil
- 30: Abschlusselement
- 31: Spitze
- 32: Hohlraum
- 33: Innenraum
- 34: Innenseite
- 35: Innenseite
- 36: Metallplatte/verstärkter Abschnitt
- 37: Fläche/Druck- oder Schlagfläche
- 38: Treibstange
- 39: Pfeil
- 40: Pfeil
- 41: Pfeil
- 42: Treibstangenabschnitte
- 43: Abdeckelement
- 43': vorderes Ende der Treibstange 38

## Patentansprüche

1. Verfahren zum Verlegen von Rohren (10) in einer Mülldeponie (1)
**dadurch gekennzeichnet,**
**dass** durch Vorwärtstreiben eines Bohrkopfes (19) ein Sackloch-Bohrkanal (11) mit einem ersten vorgegebenen Durchmesser in der Mülldeponie (1) erzeugt wird, der Sackloch-Bohrkanal (11) durch Vorwärtstreiben eines Sacklochräumers (24) auf einen zweiten vorgegebenen Durchmesser aufgeweitet wird, der Sacklochräumer (24) aus dem aufgeweiteten Sackloch-Bohrkanal (11) rückwärts herausgezogen wird und ein zu verlegendes Rohr (10) in den aufgeweiteten Sackloch-Bohrkanal (11) hineingetrieben wird.

2. Verfahren nach Anspruch 1,
**dadurch gekennzeichnet,**
**dass** nach Erzeugen des Sackloch-Bohrkanals (11) mit dem ersten vorgegebenen Durchmesser der Bohrkopf (19) aus dem Sackloch-Bohrkanal (11) rückwärts herausgezogen wird und dass in einem anschließenden Verfahrensschritt der Sacklochräumer (24) zum Aufweiten des Sackloch-Bohrkanals (11) in diesen hineingetrieben wird.

3. Verfahren nach Anspruch 1,
**dadurch gekennzeichnet,**
**dass** das Erzeugen und Aufweiten des Sackloch-Bohrkanals (11) in einem gemeinsamen Verfahrensschritt durch Vorwärtstreiben eines mit einem Sacklochräumer (24) kombinierten Bohrkopfs (19) erfolgt.

4. Verfahren nach einem der vorhergehenden Ansprüche,
**dadurch gekennzeichnet,**
**dass** der Sackloch-Bohrkanal (11) durch eine Horizontalbohrung erzeugt wird.

5. Verfahren nach einem der vorhergehenden Ansprüche,
**dadurch gekennzeichnet,**
**dass** das zu verlegende Rohr (11) aus mehreren Rohrabschnitten (12) zusammengesetzt wird, die insbesondere im Stumpfschweißverfahren miteinander verbunden werden.

6. Verfahren nach einem der vorhergehenden Ansprüche,
**dadurch gekennzeichnet,**
**dass** an das vordere Ende des Rohrs (11) ein Abschlusselement (30) angebracht wird, das zumindest einen zum Inneren (33) des Rohrs (10) hin gelegenen verstärkten Abschnitt (36) umfasst, dass zum Einbringen des Rohrs (10) in den aufgeweiteten Sackloch-Bohrkanal (11) eine Treibstange (38) in das Rohr (10) eingeführt wird, bis deren vorderes Ende an dem verstärkten Abschnitt (36) des Abschlusselements (30) zur Anlage kommt, und dass das Rohr (10) durch Vorwärtsbewegen der Treibstange (38) in den Sackloch-Bohrkanal (11) hineingetrieben wird.

7. Verfahren nach einem der vorhergehenden Ansprüche,
**dadurch gekennzeichnet,**
**dass** nach Einbringen des Rohrs (10) in den Sackloch-Bohrkanal (11) der Bereich zwischen der Rohraußenwand und der Innenwand des Sackloch-Bohrkanals (11) im Bereich der Austrittsöffnung (17) des Sackloch-Bohrkanals (11) abgedichtet wird.

8. Verfahren nach einem der vorhergehenden Ansprüche,
**dadurch gekennzeichnet,**
**dass** der Sackloch-Bohrkanal (11) im Verdrängungsverfahren erzeugt wird.

9. Verfahren nach einem der vorhergehenden Ansprüche,
**dadurch gekennzeichnet,**
**dass** der Sackloch-Bohrkanal (11) in einer Mülldeponie (1) erzeugt wird.

10. Verfahren nach einem der vorhergehenden Ansprüche,
**dadurch gekennzeichnet,**
**dass** vor Einbringen des zu verlegenden Rohres (10) in der Rohrwand Öffnungen (13), insbesondere schlitzförmige Öffnungen ausgebildet werden.

11. Verfahren nach Anspruch 10,
**dadurch gekennzeichnet,**
**dass** in dem Bereich des Rohrs (10), der nach vollständigem Einbringen in den Sackloch-Bohrkanal (11) im Bereich der Austrittsöffnung (17) des Sackloch-Bohrkanals (11) zu liegen kommt, keine Öffnungen (13) in der Rohrwand ausgebildet werden.

12. Verfahren zum Gewinnen von Methangas aus einer Mülldeponie,
**dadurch gekennzeichnet,**
**dass** zumindest ein Rohr (10) durch ein Verfahren nach einem der Ansprüche 10 oder 11 in die Mülldeponie (1) eingebracht wird und dass in der Mülldeponie (1) vorhandenes Methangas über die Öffnungen (13) in der Rohrwand abgesaugt wird.

13. Räumer ausgebildet für ein Bohrgerät (9) zum Erzeugen eines Bohrkanals (11), wobei der Räumer (24) zum Aufweiten eines Bohrkanals (11) über ein verlängerbares Bohrgestänge (20) an dem Bohrgerät (9) anschließbar ist und an einer Seite zumindest bereichsweise eine eine konisch zulaufende Form bildende Schrägfläche (25) besitzt,**dadurch gekennzeichnet,**
**dass** der Räumer (24) zusätzlich an seiner der einen Seite entgegengesetzten Seite eine eine in entgegengesetzter Richtung konisch zulaufende Form bildende Schrägfläche (26) besitzt, die ein Zurückziehen des Räumers (24) aus dem Bohrkanal (11) entgegengesetzt zur Bohrrichtung ermöglicht,
**dass** zwischen den beiden konisch zulaufenden Schrägflächen (25, 26) des Räumers (24) ein zum Erzeugen einer möglichst glatten Bohrkanalwand ausgebildetes Mittelteil vorgesehen ist, das eine zylindrische Form mit glatter Oberfläche besitzt,
**dass** im Bereich der konisch zulaufenden Schrägflächen (25, 26) jeweils Zähne (28) ausgebildet sind, die nicht zu dem zylindrischen, glatten Mittelteil des Räumers (24) hin überstehen; und
**dass** der Räumer bei der Ausführung des Verfahrens nach zumindest einem der vorhergehenden Ansprüche als Mittel zum Aufweiten des mit einem ersten vorgegebenen Durchmesser erzeugten Bohrkanals (11) verwendbar ist.

14. Räumer nach Anspruch 13,
**dadurch gekennzeichnet,**
**dass** die jeweils die konische Form an den beiden Seiten des Räumers bildenden Schrägflächen (25, 26) im Wesentlichen die gleichen Winkel zur Längsachse des Räumers (24) einnehmen.

15. Räumer nach Anspruch 13 oder 14,
**dadurch gekennzeichnet,**
**dass** der Räumer (24) mit einem Bohrkopf (19) insbesondere über ein Bohrgestänge (20) verbunden ist, wobei der Bohrkopf (19) in Bohrrichtung vor dem Räumer (24) angeordnet ist, so dass beim Erzeugen des Bohrkanals (11) durch den Bohrkopf (19) durch den nachfolgenden Räumer (24) im gleichen Verfahrensschritt die Aufweitung des Bohrkanals (11) erfolgt.

16. Bohrgerät mit Bohrkopf (19) und einem Räumer (24), wobei der Bohrkopf (19) zum Erzeugen eines Bohrkanals (11) mit einem ersten vorgegebenen Durchmesser und der Räumer (24) zum Aufweiten des erzeugten Bohrkanals (11) auf einen zweiten vorgegebenen Durchmesser jeweils über ein verlängerbares Bohrgestänge (20) an dem Bohrgerät (9) anschließbar sind und der Räumer (24) an einer Seite zumindest bereichsweise eine konisch zulaufende Form (25) besitzt, **dadurch gekennzeichnet,**
**dass** der Räumer nach einem der Ansprüche 13 bis 15 ausgebildet ist.

17. Bohrgerät nach Anspruch 16,
**dadurch gekennzeichnet,**
**dass** das Bohrgerät (9) als Horizontalbohrgerät ausgebildet ist.

18. Verfahren nach Anspruch 1,
**dadurch gekennzeichnet,**
**dass** an dem in den Bohrkanal (11) einzuführenden vorderen Ende des Rohrs (10) ein Abschlusselement (30) vorgesehen ist,
das zumindest einen zum Inneren des Rohrs (10) hin gelegenen verstärkten Abschnitt (36) umfasst, der als Druck- oder Schlagfläche (37) für das vordere Ende (43) einer in das Rohr (10) eingeführten, gegen die Druck- oder Schlagfläche (37) auflaufenden Treibstange (38) ausgebildet ist.

19. Verfahren nach Anspruch 18,
**dadurch gekennzeichnet,**
**dass** die Druck- oder Schlagfläche (37) quer zur Längsachse des Rohrs (10) verläuft.

20. Verfahren nach Anspruch 18 oder 19,
**dadurch gekennzeichnet,**
**dass** die Druck- oder Schlagfläche (37) in das Abschlusselement (30) eingepresst ist.

21. Verfahren nach einem der Ansprüche 18 bis 20,
**dadurch gekennzeichnet,**
**dass** das Rohr (10) und/oder das Abschlusselement (30) aus Kunststoff ausgebildet sind.

22. Verfahren nach einem der Ansprüche 19 bis 21,
**dadurch gekennzeichnet,**
**dass** die Druck- oder Schlagfläche (37) aus Metall, insbesondere als Metallplatte (36) ausgebildet ist.

23. Verfahren nach einem der Ansprüche 18 bis 22,
**dadurch gekennzeichnet,**
**dass** das Rohr (10) und das Abschlusselement (30) als separate Teile ausgebildet sind, die insbesondere im Stumpfschweißverfahren miteinander verbunden sind.

24. Verfahren nach einem der Ansprüche 18 bis 23,
**dadurch gekennzeichnet,**
**dass** das Abschlusselement (30) eine im wesentlichen kegelförmige Spitze (31) besitzt.

## Claims

1. A method of laying pipes (10) in a landfill (1),
**characterized in that**
a blind hole drill channel (11) having a first predefined diameter is produced in the landfill (1) by driving a drill head (19) forward; the blind hole drill channel (11) is widened to a second predefined diameter by driving a blind hole reamer (24) forward; the blind hole reamer (24) is pulled backward out of the widened blind hole drill channel (11); and a pipe (10) to be laid is driven into the widened blind hole drill channel (11).

2. A method in accordance with claim 1,
**characterized in that**,
after the production of the blind hole drill channel (11) having the first predefined diameter, the drill head (19) is pulled backward out of the blind hole drill channel (11); and **in that**, in a subsequent method step, the blind hole reamer (24) is driven into the blind hole drill channel (11) to widen it.

3. A method in accordance with claim 1,
**characterized in that**
the production and widening of the blind hole drill channel (11) take place in a common method step by driving a drill head (19) forward that is combined with a blind hole reamer (24).

4. A method in accordance with any one of the preceding claims,
**characterized in that**
the blind hole drill channel (11) is produced by a horizontal bore.

5. A method in accordance with any one of the preceding claims,
**characterized in that**
the pipe (11) to be laid is assembled from a plurality of pipe sections (12) which are in particular connected to one another in a butt welding process.

6. A method in accordance with any one of the preceding claims,
**characterized in that**
an end element (30) is attached to the front end of the pipe (11) and comprises at least one reinforced section (36) disposed toward the interior (33) of the pipe (10); **in that** a connecting rod (38) is inserted into the pipe (10) until its front end comes into contact with the reinforced section (36) of the end element (30) in order to insert the pipe (10) into the widened blind hole drill channel (11); and **in that** the pipe (10) is driven into the blind hole drill channel (11) by driving the connecting rod (38) forward.

7. A method in accordance with any one of the preceding claims,
**characterized in that**,
after the insertion of the pipe (10) into the blind hole drill channel (11), the region between the outer pipe wall and the inner wall of the blind hole drill channel (11) is sealed in the region of the outlet opening (17) of the blind hole drill channel (11).

8. A method in accordance with any one of the preceding claims,
**characterized in that**
the blind hole drill channel (11) is produced in a displacement process.

9. A method in accordance with any one of the preceding claims,
**characterized in that**
the blind hole drill channel (11) is produced in a landfill (1).

10. A method in accordance with any one of the preceding claims,
**characterized in that**
openings (13), in particular slot-shaped openings, are formed in the pipe wall before the insertion of the pipe (10) to be laid.

11. A method in accordance with claim 10,
**characterized in that**
no openings (13) are formed in the pipe wall in the region of the pipe (10) which comes to lie in the region of the outlet opening (17) of the blind hole drill channel (11) after the complete insertion into the blind hole drill channel (11).

12. A method of recovering methane gas from a landfill,
**characterized in that**
at least one pipe (10) is inserted into the landfill (1) by a method in accordance with one of claims 10 or 11; and **in that** methane gas present in the landfill (1) is sucked out via the openings (13) in the pipe wall.

13. A reamer configured for a drilling device (9) for producing a drill channel (11), wherein the reamer (24) can be connected to the drilling device (9) via an extendable drill pipe (20) in order to widen a drill channel (11) and at least regionally has a slanted surface (25) at one side, said slanted surface (25) forming a conically tapering shape, **characterized in that** the reamer (24) additionally has a slanted surface (26) at its side opposite the one side, said slanted surface (26) forming a shape which tapers conically in the opposite direction and enabling a withdrawal of the reamer (24) from the drill channel (11) oppositely to the drilling direction; **in that** a middle part is provided between the two conically tapering slanted surfaces (25, 26) of the reamer (24), said middle part being configured to produce a drill channel wall which is as smooth as possible and having a cylindrical shape with a smooth surface;
**in that** teeth (28) are formed in the region of the conically tapering slanted surfaces (25, 26) and do not project toward the cylindrical, smooth middle part of the reamer (24); and
**in that**, on the carrying out of the method in accordance with at least one of the preceding claims, the reamer can be used as a means for widening the drill channel (11) produced with a first predefined diameter.

14. A reamer in accordance with claim 13,
**characterized in that**
the slanted surfaces (25, 26) which each form the conical shape at the two sides of the reamer substantially adopt the same angles with respect to the longitudinal axis of the reamer (24).

15. A reamer in accordance with claim 13 or claim 14,
**characterized in that**
the reamer (24) is connected to a drill head (19), in particular via a drill pipe (20), with the drill head (19) being arranged in front of the reamer (24) in the drilling direction so that, on the production of the drill channel (11) by the drill head (19), the widening of the drill channel (11) takes place by the following reamer (24) in the same method step.

16. A drilling device having a drill head (19) and having a reamer (24), wherein the drill head (19) for producing a drill channel (11) having a first predefined diameter and the reamer (24) for widening the produced drill channel (11) to a second predefined diameter can each be connected to the drilling device (9) via an extendable drill pipe (20) and the reamer (24) at least regionally has a conically tapering shape (25) at one side,
**characterized in that**
the reamer is configured in accordance with any one of the claims 13 to 15.

17. A drilling device in accordance with claim 16,
**characterized in that**
the drilling device (9) is configured as a horizontal drilling device.

18. A method in accordance with claim 1,
**characterized in that**
an end element (30) is provided at the front end of the pipe (10) to be inserted into the drill channel (11),
which end element (30) comprises at least one reinforced section (36) which is disposed toward the interior of the pipe (10) and which is configured as a pressure or impact surface (37) for the front end (43) of a connecting rod (38) which is inserted into the pipe (10) and which runs up against the pressure or impact surface (37).

19. A method in accordance with claim 18,
**characterized in that**
the pressure or impact surface (37) extends transversely to the longitudinal axis of the pipe (10).

20. A method in accordance with claim 18 or claim 19,
**characterized in that**
the pressure or impact surface (37) is pressed into the end element (30).

21. A method in accordance with any one of the claims 18 to 20,
**characterized in that**
the pipe (10) and/or the end element (30) is/are formed from plastic.

22. A method in accordance with any one of the claims 19 to 21,
**characterized in that**
the pressure or impact surface (37) is formed from metal and is in particular configured as a metal plate (36).

23. A method in accordance with any one of the claims 18 to 22,
**characterized in that**
the pipe (10) and the end element (30) are configured as separate parts which are in particular connected to one another in a butt welding process.

24. A method in accordance with any one of the claims 18 to 23,
**characterized in that**
the end element (30) has a substantially conical tip (31).

## Revendications

1. Procédé de pose de tubes (10) dans une décharge de déchets (1),
**caractérisé en ce que**
on réalise dans la décharge (1) un canal de forage borgne (11) d'un premier diamètre prédéterminé en faisant avancer une tête de forage (19), on élargit le canal de forage borgne (11) à un deuxième diamètre prédéterminé en faisant avancer un moyen déblayeur pour trou borgne (24), on retire le moyen déblayeur pour trou borgne (24) en arrière hors du canal de forage borgne (11) élargi et on enfonce un tube à poser (10) dans le canal de forage borgne (11) élargi.

2. Procédé selon la revendication 1,
**caractérisé en ce que**
après avoir réalisé le canal de forage borgne (11) ayant le premier diamètre prédéterminé, on retire la tête de forage (19) vers l'arrière hors du canal de forage borgne (11), et **en ce que**
dans une étape de procédé suivante, on enfonce le moyen déblayeur pour trou borgne (24) dans le canal de forage borgne (11) élargi, afin d'élargir ce dernier.

3. Procédé selon la revendication 1,
**caractérisé en ce que**
la réalisation et l'élargissement du canal de forage borgne (11) sont effectués dans une étape de procédé commune en faisant avancer une tête de forage (19) combinée avec un moyen déblayeur pour trou borgne (24).

4. Procédé selon l'une des revendications précédentes,
**caractérisé en ce que**
on réalise le canal de forage borgne (11) par un forage horizontal.

5. Procédé selon l'une des revendications précédentes,
**caractérisé en ce que**
le tube (11) à poser est composé de plusieurs tronçons de tube (12) qui sont assemblés les unes aux autres, en particulier par soudage bout à bout.

6. Procédé selon l'une des revendications précédentes,
**caractérisé en ce que**
à l'extrémité avant du tube (11), on monte un élément de terminaison (30) comprenant au moins un tronçon renforcé (36) situé vers l'intérieur (33) du tube (10), **en ce que**
pour insérer le tube (10) dans le canal de forage borgne (11) élargi, on introduit une barre d'enfoncement (38) dans le tube (10) jusqu'à ce que son extrémité avant vienne en appui contre le tronçon renforcé (36) de l'élément de terminaison (30), et **en ce que**
on enfonce le tube (10) dans le canal de forage borgne (11) en faisant avancer la barre d'enfoncement (38).

7. Procédé selon l'une des revendications précédentes,
**caractérisé en ce que**
après avoir inséré le tube (10) dans le canal de forage borgne (11), on scelle la zone entre la paroi extérieure du tube et la paroi intérieure du canal de forage borgne (11) au niveau de l'ouverture de sortie (17) du canal de forage borgne (11).

8. Procédé selon l'une des revendications précédentes,
**caractérisé en ce que**
on réalise le canal de forage borgne (11) par refoulement.

9. Procédé selon l'une des revendications précédentes,
**caractérisé en ce que**
on réalise le canal de forage borgne (11) dans une décharge de déchets (1).

10. Procédé selon l'une des revendications précédentes,
**caractérisé en ce que**
avant d'insérer le tube (10) à poser, on réalise des ouvertures (13), en particulier des ouvertures en forme de fente, dans la paroi du tube.

11. Procédé selon la revendication 10,
**caractérisé en ce que**
dans la zone du tube (10) qui vient se placer au niveau de l'ouverture de sortie (17) du canal de forage borgne (11) après l'insertion complète dans le canal de forage borgne (11), on ne réalise aucune ouverture (13) dans la paroi du tube.

12. Procédé de récupération de gaz méthane à partir d'une décharge de déchets,
**caractérisé en ce que**
on insert au moins un tube (10) dans la décharge (1) par un procédé selon l'une des revendications 10 ou 11, et **en ce que**
le gaz méthane présent dans la décharge (1) est extrait par aspiration via les ouvertures (13) dans la paroi du tube.

13. Moyen déblayeur destiné à un dispositif de forage (9) pour réaliser un canal de forage (11), dans lequel, en vue d'élargir un canal de forage (11), le moyen déblayeur (24) peut être raccordé au dispositif de forage (9) par l'intermédiaire d'un ensemble de tiges de forage (20) prolongeable et présente sur un côté au moins localement une surface oblique (25) de forme convergente conique,
**caractérisé en ce que**
le moyen déblayeur (24) présente en supplément, sur son côté opposé dudit côté, une surface oblique (26) convergente conique en sens opposé qui permet un retrait du moyen déblayeur (24) hors du canal de forage (11) en sens opposé à la direction de forage, **en ce que** il est prévu une partie centrale réalisée entre les deux surfaces obliques (25, 26) convergentes coniques du moyen déblayeur (24), qui est destinée à réaliser une paroi aussi lisse que possible du canal de forage et qui possède une forme cylindrique ayant une surface lisse, **en ce que** des dents respectives (28) sont formées au niveau des surfaces obliques (25, 26) convergentes coniques, lesdites dents ne dépassant pas vers la partie centrale cylindrique lisse du moyen déblayeur (24) ; et **en ce que** lors de la mise en œuvre du procédé selon l'une au moins des revendications précédentes, le moyen déblayeur peut servir de moyen destiné à élargir le canal de forage (11) réalisé avec un premier diamètre prédéterminé.

14. Moyen déblayeur selon la revendication 13,
**caractérisé en ce que**
les surfaces obliques (25, 26) formant la forme conique respective sur les deux côtés du moyen déblayeur prennent sensiblement les mêmes angles par rapport à l'axe longitudinal du moyen déblayeur (24).

15. Moyen déblayeur selon la revendication 13 ou 14,
**caractérisé en ce que**
le moyen déblayeur (24) est relié à une tête de forage (19), en particulier par l'intermédiaire d'un ensemble de tiges de forage (20), la tête de forage (19) étant disposée devant le moyen déblayeur (24) dans la direction de forage, de sorte que lors de la réalisation du canal de forage (11) par la tête de forage (19), l'élargissement du canal de forage (11) s'effectue dans la même étape de procédé par le moyen déblayeur (24) suivant.

16. Dispositif de forage comportant une tête de forage (19) et un moyen déblayeur (24),
dans lequel
la tête de forage (19) destinée à réaliser un canal de forage (11) ayant un premier diamètre prédéterminé, et le moyen déblayeur (24) destiné à élargir le canal de forage réalisé (11) jusqu'à un deuxième diamètre prédéterminé peuvent être reliés chacun au dispositif de forage (9) par l'intermédiaire d'un ensemble de tiges de forage (20) prolongeable, et le moyen déblayeur (24) possède sur un côté au moins localement une forme convergente conique (25),
**caractérisé en ce que**
le moyen déblayeur est réalisé selon l'une des revendications 13 à 15.

17. Dispositif de forage selon la revendication 16,
**caractérisé en ce que**
le dispositif de forage (9) est réalisé sous forme de dispositif de forage horizontal.

18. Procédé selon la revendication 1,
**caractérisé en ce que**
à l'extrémité avant du tube (10), destinée à être insérée dans le canal de forage (11), il est prévu un élément de terminaison (30) qui comprend au moins un tronçon renforcé (36) qui est situé vers l'intérieur du tube (10) et qui est réalisé sous forme de surface de poussée ou d'impact (37) pour l'extrémité avant (43) d'une barre d'enfoncement (38) qui est insérée dans le tube (10) et qui vient s'appliquer contre la surface de poussée ou d'impact (37).

19. Procédé selon la revendication 18,
**caractérisé en ce que**
la surface de poussée ou d'impact (37) s'étend transversalement à l'axe longitudinal du tube (10).

20. Procédé selon la revendication 18 ou 19,
**caractérisé en ce que**
la surface de poussée ou d'impact (37) est pressée dans l'élément de terminaison (30).

21. Procédé selon l'une des revendications 18 à 20,
**caractérisé en ce que**
le tube (10) et/ou l'élément de terminaison (30) sont réalisés en matière plastique.

22. Procédé selon l'une des revendications 19 à 21,
**caractérisé en ce que**
la surface de poussée ou d'impact (37) est réalisée en métal, en particulier sous forme de plaque métallique (36).

23. Procédé selon l'une des revendications 18 à 22,
**caractérisé en ce que**
le tube (10) et l'élément de terminaison (30) sont réalisés sous forme de pièces séparées qui sont reliées l'une à l'autre, en particulier par soudage bout à bout.

24. Procédé selon l'une des revendications 18 à 23,
**caractérisé en ce que**
l'élément de terminaison (30) possède une pointe (31) de forme sensiblement conique.
